# EUROPEAN PATENT SPECIFICATION

(11) **EP 3 613 582 B1**
(45) Date of publication and mention of the grant of the patent: **25.08.2021**
(21) Application number: 19174652.8
(22) Date of filing: 15.05.2019
(51) Int. Cl.: B32B 5/02, B32B 7/12, B32B 27/12, B32B 27/28, B32B 27/30, B32B 27/32, B32B 27/34, B32B 27/36, B32B 27/40

(54) **A COMPOSITE AND AN ARTICLE COMPRISING THE SAME**
VERBUNDSTOFF UND ARTIKEL DAMIT
COMPOSITE ET ARTICLE LE COMPRENANT

(30) Priority: 24.08.2018 TW 107129598; 25.04.2019 US 201916394486
(43) Date of publication of application: 26.02.2020
(73) Proprietor: Tai Yu Arts & Development Co., Ltd., Chiayi City 600 (TW); David Lu & Corp., Taipei (TW)
(72) Inventor: LU, MING CHING, Taipei (TW); YANG, MAO TING, 600 Chiayi City (TW)
(74) Representative: Lavoix

(56) References cited:
- CN-A- 103 552 325
- CN-A- 105 968 717
- CN-A- 107 057 283
- CN-U- 203 196 138
- CN-U- 205 134 069

## Description

### Field of the Invention

The present invention is directed to a composite for reflecting energy produced from a body to the body itself. Particularly, the present invention pertains to a substrate comprising inert materials and the composites for use in a method to enhance health conditions of animals by reflecting the energy produced from a body to the body itself.

### Background of the Invention

Physical therapy (physiotherapy), a complementary and alternative medicine therapy, has been widely applied in diagnosing and treating various diseases and defects. Physiotherapy can help people avoid surgery, reduce medications, manage pain and reduce the risk of injury. Physical therapy uses mechanical force and movements (bio-mechanics or kinesiology), manual therapy, exercise therapy, and electrotherapy, remediates impairments and promotes mobility and function.

US 5,451,199 provides a portable device for carrying with the human body that includes a far infrared ray generating composition plate, a magnetic radiating unit, an electronic circuit unit, and a mercury battery disposed on the far infrared ray generating composition plate for self-radiating bioenergy so as to eliminate and reduce human fatigue and stress. US 6,461,377 relates to a portable therapeutic device that radiates far infrared rays from Macbanseok received therein and applies electric stimulation to the body by means of an electric needle, in addition to generating magnetic vibration through rotation of two permanent magnets having magnetic polarities different from each other. US 6,516,229 describes a personal therapeutic device comprising a supporting means with a far infrared ray emitting body placed thereon that provides a means for enhancing the health conditions of human beings. US 6,860,896 provides an energy therapy device that utilizes an array of energy-emitting elements to stimulate Qi energy flow along acupuncture meridians. CN 107 057 283 provides a composite comprising a first layer and a second layer attached to the first layer, wherein the first layer comprises carbon fiber in the amount of 62% to 68% (w/w) based on the total composite and the second layer comprises, based on the total composite, graphene oxide in an amount of 0.01% to 0.25% (w/w), carbon nanotube in an amount of 0.01% to 0.25% (w/w), and a resin material in an amount of 5% to 20% (w/w).

However, there is a need to develop an article for enhancing health conditions of a human by physical therapy.

### Summary of the Invention

The present disclosure provides composites for use in a method of enhancing health of a body, comprising applying a composite comprising inert materials to the body, whereby the composite can reflect energy produced by the body to the body itself so as to enhance health conditions of the body.

In some embodiments, the composite is attached to or enclosed in an article. In some embodiments, the article is a patch, shoe pad, belt, bust pad, abdominal pad, neck strap, bend, tank top, vest, hat, or underwear.

In one aspect, the present disclosure provides a composite comprising a first layer and a second layer attached on the first layer, wherein the first layer comprises carbon fiber in the amount of about 65% to about 90% (w/w) based on the total composite and the second layer comprising, based on the total composite, graphene in an amount of about 0.01% to about 1% (w/w), carbon nanotube in the amount of 0.1% to about 3.0% (w/w), and a resin or an adhesive material in an amount of about 9.9% to about 35% (w/w)., wherein the resin is polyethylene (PE), polypropylene (PP), polyester, thermoplastic polyurethane (TPU), thermoplastic elastomer (TPE), acrylic resin, polyurethane (PU), silicone resin, polyvinyl chloride (PVC), polystyrene (PS), polyamide (PA), polyoxymethylene (POM), polycarbonate (PC), poly(methyl methacrylate) (PMMA), epoxy, and thermoplastic rubber (TPR) and any combinations thereof.

In another aspect, the present disclosure provides a laminar, comprising two or more composites of the present disclosure.

### Detailed Description of the Invention

Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices and materials are described herein.

As used herein and in the appended claims, the singular forms "a," "and," and "the" include plural referents unless the context clearly dictates otherwise.

Also, the use of "or" means "and/or" unless stated otherwise. Similarly, "comprise," "comprises," "comprising" "include," "includes," and "including" are interchangeable and not intended to be limiting.

When the body breaks down food molecules, the energy in the chemical bonds of the food is released, which powers the body. However, the human body is only about 25 percent efficient, meaning that 75 percent of the energy from the food is released as heat. Heat transfer through radiation takes place in the form of electromagnetic waves mainly in the infrared region. Radiation emitted by a body is a consequence of thermal agitation of its composing molecules. Accordingly, the present disclosure is based on a composite comprising inert materials and an article having the composite, which can reflect energy produced by a body to the body itself so as to enhance health conditions of the body.

The composite of the present disclosure comprises inert materials such as graphene, carbon nanotubes, carbon fibers and resins. The composite *per se* of the present disclosure does not emit energy but can reflect energy produced by a body to the body itself so as to enhance health conditions of the body. In one embodiment, the energy to be reflected by the composite is an electromagnetic wave having wavelength of about 4 µm to about 14 µm. The wavelength of about 4 µm to about 14 µm falls within the region of far infrared (FIR). Objects with temperatures between about 5 K and 340 K will emit radiation in the far infrared range. Thermal radiation, also known as heat, is the emission of electromagnetic waves from all matter that has a temperature greater than absolute zero. The composite of the present disclosure reflects the electromagnetic wave emitted from human body.

In one embodiment, the present disclosure provides a composite comprising a first layer and a second layer attached on the first layer, wherein the first layer comprises carbon fiber in the amount of about 65% to about 90% (w/w) based on the total composite and the second layer comprising, based on the total composite, graphene in an amount of about 0.01% to about 1% (w/w), carbon nanotube in the amount of 0.1% to about 3.0% (w/w), and a resin or an adhesive material in an amount of about 10% to about 35% (w/w), wherein the resin is polyethylene (PE), polypropylene (PP), polyester, thermoplastic polyurethane (TPU), thermoplastic elastomer (TPE), acrylic resin, polyurethane (PU), silicone resin, polyvinyl chloride (PVC), polystyrene (PS), polyamide (PA), polyoxymethylene (POM), polycarbonate (PC), poly(methyl methacrylate) (PMMA), epoxy, and thermoplastic rubber (TPR) and any combinations thereof.

Graphene is a monoatomic layer of carbon atoms, sp² hybridized, organized according to a crystalline structure with hexagonal cells. This basic structure has a planar conformation and consequently the monoatomic layer appears as a two-dimensional material. Due to the particular geometry of the system and electronic configuration of carbon, graphene has a very specific electronic band structure, with exceptional mechanical, and also electronic, characteristics. With a Young modulus equal to 1 TPa and a tensile strength equal to 130 GPa, graphene is the most resistant material so far measured. Furthermore, it has a thermal conductivity of 5,000 W/mK and electrical resistivity of 4×10⁻⁵ Ohm·cm.

The carbon nanotubes exhibit an insulator, a conductor or a semiconductor property depending on the chirality of the tube itself. Carbon nanotubes have strong tensile strength more than 100 times greater than steel due to their strong covalent bond with carbon atoms, excellent flexibility and elasticity, and chemically stable characteristics. Due to such size and specific physical properties, they are industrially important in the production of composites and have high utility in the fields of electronic materials, energy materials and various other fields.

Carbon fibers are low-cost reinforced materials which are light and strong, and have a high modulus of elasticity. Carbon fibers are fibers about 5-10 micrometers in diameter and composed mostly of carbon atoms. Carbon fibers have several advantages including high stiffness, high tensile strength, low weight, high chemical resistance, high temperature tolerance and low thermal expansion.

Resin is a solid or highly viscous substance of plant or synthetic origin that is typically convertible into polymers. Resins are usually mixtures of organic compoundsThe resin includes polyethylene (PE), polypropylene (PP), polyester, thermoplastic polyurethane (TPU), thermoplastic elastomer (TPE), acrylic resin, polyurethane (PU), silicone resin, polyvinyl chloride (PVC), polystyrene (PS), polyamide (PA), polyoxymethylene (POM), polycarbonate (PC), poly(methyl methacrylate) (PMMA), epoxy, and thermoplastic rubber (TPR) and any combinations thereof. In some embodiments, the resin is epoxy, PMMA or TPU.

An adhesive material can be used to fix the resin, graphene and carbon nanotube and adhere the second layer to the first layer. In one embodiment, the resin can be used as the adhesive material. In some embodiments, the adhesive material includes, but is not limited to, PMMA, or polyurethane, epoxy and any modified form thereof.

In one embodiment, the amount of carbon fiber ranges from about 65% to about 90% (w/w), about 65% to about 80% (w/w), about 65% to about 70% (w/w), about 70% to about 90% (w/w) or about 70% to about 80% (w/w).

In one embodiment, the amount of graphene ranges from about 0.01% to about 1% (w/w), about 0.05% to about 1% (w/w), about 0.1% to about 1% (w/w), about 0.5% to about 1% (w/w), about 0.01% to about 0.5% (w/w), about 0.01% to about 0.1% (w/w) or about 0.01% to about 0.05% (w/w).

In one embodiment, the amount of carbon nanotube ranges from about 0.1% to about 3.0% (w/w), about 0.1% to about 2.5% (w/w), about 0.1% to about 2.0% (w/w), about 0.1% to about 1.5% (w/w), about 0.1% to about 1.0% (w/w), about 0.1% to about 0.5% (w/w), about 0.5% to about 3.0% (w/w), about 0.5% to about 2.5% (w/w), about 0.5% to about 2.0% (w/w), about 0.5% to about 1.5% (w/w), about 0.5% to about 1.0% (w/w), about 1.0% to about 3.0% (w/w), about 1.0% to about 2.5% (w/w), about 1.0% to about 2.0% (w/w), about 1.0% to about 1.5% (w/w), about 1.5% to about 3.0% (w/w), about 1.5% to about 2.5% (w/w), about 1.5% to about 2.0% (w/w), about 2.0% to about 3% (w/w) or about 2.5% to about 3% (w/w).

In one embodiment, the amount of resin or an adhesive material ranges from about 10% to about 35% (w/w), about 10% to about 30% (w/w), about 10% to about 25% (w/w), about 10% to about 20% (w/w), about 10% to about 15% (w/w), about 15% to about 35% (w/w), about 15% to about 30% (w/w) or about 15% to about 25% (w/w), about 20% to about 35% (w/w), about 20% to about 30% (w/w).

In one embodiment, the first layer and the second layer can be in any thickness based on the user's need.

The present disclosure provides a laminate comprising two or more composites of the present disclosure.

The present disclosure also provides an article comprising a composite of the present disclosure attached to or enclosed in the article. In some embodiments, the article is a patch, shoe pad, belt, bust pad, abdominal pad, neck strap, bend, tank top, vest, hat, or underwear. The article can be in any shape.

The present disclosure also provides the composite of the present invention for use in a method of enhancing health of a body, comprising applying a composite of the present disclosure comprising inert materials to the body, whereby the a composite of the present disclosure can reflect energy produced by the body to the body itself so as to enhance health conditions of the body.

In one embodiment, the composite is the one described herein.

### Examples

The composites of the present disclosure having the following formulations were enclosed in shoe pads and meridian patches.

| | First layer | Second layer |
|---|---|---|
| Composite A | 70% (w/w) carbon fiber | 1% (w/w) graphene, 0.1% (w/w) carbon nanotube, 28.9 % (w/w) epoxy |
| Composite B | 80% (w/w) carbon fiber | 0.05% (w/w) graphene, 2% (w/w) carbon nanotube, 17.95% (w/w) PMMA |
| Composite C | 90% (w/w) carbon fiber | 0.01% (w/w) graphene, 1% (w/w) carbon nanotube, 8.99 % (w/w) TPU |

### Shoe Pad Testing

Six men and six women wore shoes with the shoe pads enclosed with Composite A, B or C for 8 hours per day for one week. After the testing,the following results detected by an AE Organism Electric Analyzer were obtained:
Improvement on vascular resistance: more than 5%;
Improvement on vascular elasticity: more than 10%;
Improvement on cerebrovascular elasticity: more than 10%;
Improvement on hyperosteogeny: more than 10%; and
Improvement on osteoporosis: more than 10%.

### Meridian Patch Testing

Six men and six women attended the testing. The meridian patches enclosed with Composite A, B or C were applied to yongquan acupoint on soles of the subjects for 8 hours per day for one week. Then, the subjects conducted a grip strength testing and the results measured by Hand Dynamometer were shown in the table below.

| Subject No. | Grip Strength (kg) on the first day (a) | Grip Strength (kg) on the seventh day (b) | Improvement (%) ((b-a)/a × 100) |
|---|---|---|---|
| 1 (male) | 30.1 | 34.0 | 12.95 |
| 2 (male) | 28.0 | 32.3 | 15.36 |
| 3 (male) | 28.5 | 32.0 | 12.28 |
| 4 (male) | 27.3 | 30.3 | 10.99 |
| 5 (male) | 29.6 | 33.9 | 14.52 |
| 6 (male) | 22.4 | 26.0 | 16.07 |
| 7 (female) | 18.5 | 21.1 | 14.05 |
| 8 (female) | 21.0 | 25.2 | 20.00 |
| 9 (female) | 15.7 | 19.0 | 21.02 |
| 10 (female) | 10.3 | 12.0 | 16.50 |
| 11 (female) | 11.8 | 13.4 | 13.56 |
| 12 (female) | 7.7 | 8.7 | 12.98 |
| | | | 15.02 in average |

The subjects also conducted a balance testing for Composite A, B or C and the results were shown in the table below. A circle with a diameter of 30 cm was drawn on the ground and each subject stood in the center of the circle and turned around 10 times in circles. The results are shown in the table below.

| Subject No. | Shift distance (cm) on the first day (a) | Shift distance (cm) on the seventh day (b) | Improvement (%) ((b-a)/a × 100) |
|---|---|---|---|
| 1 (male) | 30 | 10 | 66.7 |
| 2 (male) | 35 | 24 | 31.4 |
| 3 (male) | 40 | 20 | 50.0 |
| 4 (male) | 45 | 28 | 37.8 |
| 5 (male) | 46 | 30 | 34.8 |
| 6 (male) | 50 | 26 | 48.0 |
| 7 (female) | 40 | 22 | 45.0 |
| 8 (female) | 33 | 18 | 45.4 |
| 9 (female) | 46 | 30 | 34.8 |
| 10 (female) | 60 | 40 | 33.3 |
| 11 (female) | 55 | 33 | 40.0 |
| 12 (female) | 48 | 27 | 43.7 |
| | | | 42.6 in average |

## Claims

1. A composite comprising a first layer and a second layer attached on the first layer, wherein the first layer comprises carbon fiber in the amount of about 65% to about 90% (w/w) based on the total composite and the second layer comprises, based on the total composite, graphene in an amount of about 0.01% to about 1% (w/w), carbon nanotube in an amount of 0.1% to about 3.0% (w/w), and a resin or an adhesive material in an amount of about 10% to about 35% (w/w),
wherein the resin is polyethylene (PE), polypropylene (PP), polyester, thermoplastic polyurethane (TPU), thermoplastic elastomer (TPE), acrylic resin, polyurethane (PU), silicone resin, polyvinyl chloride (PVC), polystyrene (PS), polyamide (PA), polyoxymethylene (POM), polycarbonate (PC), poly(methyl methacrylate) (PMMA), epoxy or thermoplastic rubber (TPR) or a combination thereof.

2. The composite of claim 1, wherein the adhesive material is PMMA, polyurethane, epoxy or any modified form thereof.

3. The composite of claim 1, wherein the amount of carbon fiber ranges from about 70% to about 90% (w/w).

4. The composite of claim 1, wherein the amount of graphene ranges from about 0.05% to about 1% (w/w).

5. The composite of claim 1, wherein the amount of carbon nanotube ranges from about 0.1% to about 2.5% (w/w).

6. The composite of claim 1, wherein the amount of resin or an adhesive material ranges from about 10% to about 30% (w/w).

7. The composite of claim 1, which can reflect energy produced by vibration of water molecules within body to the body itself so as to improve human health.

8. A laminate comprising two or more composites of claim 1.

9. An article comprising a composite of claim 1 attached to or enclosed in the article.

10. The article of claim 10, which is a patch, shoe pad, belt, bust pad, abdominal pad, neck strap, bend, tank top, vest, hat, or underwear.

11. The composite of claim 1 for use in a method of enhancing health of a body, comprising applying a composite of claim 1 to the body, whereby the composite can reflect energy produced by the body to the body itself so as to enhance health conditions of the body.

## Patentansprüche

1. Verbundstoff, umfassend eine erste Schicht und eine zweite Schicht, die an der ersten Schicht angebracht ist, wobei die erste Schicht Kohlenstofffaser in einer Menge von etwa 65 % bis etwa 90 % (Gew./Gew.) bezogen auf den gesamten Verbundstoff umfasst, und die zweite Schicht, bezogen auf den gesamten Verbundstoff, Graphen in einer Menge von etwa 0,01 % bis etwa 1 % (Gew./Gew.), Kohlenstoff-Nanoröhren in einer Menge von 0,1 % bis etwa 3,0 % (Gew./Gew.) und ein Harz oder ein Klebstoffmaterial in einer Menge von etwa 10 % bis etwa 35 % (Gew./Gew.) umfasst, wobei das Harz Polyethylen (PE), Polypropylen (PP), Polyester, thermoplastisches Polyurethan (TPU), thermoplastisches Elastomer (TPE), Acrylharz, Polyurethan (PU), Silikonharz, Polyvinylchlorid (PVC), Polystyrol (PS), Polyamid (PA), Polyoxymethylen (POM), Polycarbonat (PC), Poly(methylmethacrylat) (PMMA), Epoxid oder thermoplastischer Gummi (TPR) oder eine Kombination davon ist.

2. Verbundstoff nach Anspruch 1, wobei das Klebstoffmaterial PMMA, Polyurethan, Epoxid oder eine modifizierte Form davon ist.

3. Verbundstoff nach Anspruch 1, wobei die Menge an Kohlenstofffasern in einem Bereich von etwa 70 % bis etwa 90 % (Gew./Gew.) ist.

4. Verbundstoff nach Anspruch 1, wobei die Menge an Graphen in einem Bereich von etwa 0,05 % bis etwa 1 % (Gew./Gew.) ist.

5. Verbundstoff nach Anspruch 1, wobei die Menge an Kohlenstoff-Nanoröhren in einem Bereich von etwa 0,1 % bis etwa 2,5 % (Gew./Gew.) ist.

6. Verbundstoff nach Anspruch 1, wobei die Menge an Harz oder einem Klebstoffmaterial in einem Bereich von etwa 10 % bis etwa 30 % (Gew./Gew.) ist.

7. Verbundstoff nach Anspruch 1, der Energie, die durch Vibration von Wassermolekülen in dem Körper erzeugt wird, an den Körper selbst reflektieren kann, um die menschliche Gesundheit zu verbessern.

8. Laminat, umfassend zwei oder mehrere Verbundstoffe nach Anspruch 1.

9. Gegenstand, umfassend einen Verbundstoff nach Anspruch 1, der an dem Gegenstand angebracht oder darin eingeschlossen ist.

10. Gegenstand nach Anspruch 10, der ein Pflaster, ein Schuhpolster, ein Gürtel, ein Brustpolster, ein Bauchpolster, ein Nackenband, ein Bend, ein Tank-Top, eine Weste, ein Hut oder Unterwäsche ist.

11. Verbundstoff nach Anspruch 1 zur Verwendung in einem Verfahren zum Verbessern der Gesundheit eines Körpers, umfassend ein anwenden eines Verbundstoffs nach Anspruch 1 auf den Körper, wodurch der Verbundstoff von dem Körper erzeugte Energie auf den Körper selbst reflektieren kann, um die Gesundheitsbedingungen des Körpers zu verbessern.

## Revendications

1. Un composite comprenant une première couche et une deuxième couche fixée sur la première couche, dans lequel la première couche comprend des fibres de carbone dans une quantité d'environ 65 % à environ 90 % en masse par rapport au composite total et la deuxième couche comprend, par rapport au composite total, du graphène dans une quantité d'environ 0,01 % à environ 1 % en masse, des nanotubes de carbone dans une quantité de 0,1 % à environ 3,0 % en masse, et une résine ou un matériau adhésif dans une quantité d'environ 10 % à environ 35 % en masse,
dans lequel la résine est du polyéthylène (PE), du polypropylène (PP), du polyester, du polyuréthane thermoplastique (TPU), de l'élastomère thermoplastique (TPE), de la résine acrylique, du polyuréthane (PU), de la résine de silicone, du polychlorure de vinyle (PVC), du polystyrène (PS), du polyamide (PA), du polyoxyméthylène (POM), du polycarbonate (PC), du poly(méthacrylate de méthyle) (PMMA), de l'époxy ou du caoutchouc thermoplastique (TPR) ou une combinaison de ceux-ci.

2. Le composite de la revendication 1, dans lequel le matériau adhésif est du PMMA, du polyuréthane, de l'époxy ou toute forme modifiée de ceux-ci.

3. Le composite de la revendication 1, dans lequel la quantité de fibres de carbone est comprise entre environ 70 % et environ 90 % en masse.

4. Le composite de la revendication 1, dans lequel la quantité de graphène est comprise entre environ 0,05 % et environ 1 % en masse.

5. Le composite de la revendication 1, dans lequel la quantité de nanotubes de carbone est comprise entre environ 0,1 % et environ 2,5 % en masse.

6. Le composite de la revendication 1, dans lequel la quantité de résine ou d'un matériau adhésif est comprise entre environ 10 % et environ 30 % en masse.

7. Le composite de la revendication 1, qui peut réfléchir l'énergie produite par la vibration de molécules d'eau dans le corps vers le corps lui-même afin d'améliorer l'état de santé d'un humain.

8. Un stratifié comprenant au moins deux composites de la revendication 1.

9. Un article comprenant un composite de la revendication 1 fixé à l'article ou contenu dans ce dernier.

10. L'article de la revendication 10, qui est un patch, un coussinet de chaussure, une ceinture, un coussinet de poitrine, un coussinet abdominal, un tour de cou, un pli, un débardeur, un maillot de corps, un chapeau ou un sous-vêtement.

11. Le composite de la revendication 1 à utiliser dans un procédé destiné à améliorer l'état de santé d'un corps, comprenant l'application d'un composite de la revendication 1 sur le corps, le composite pouvant réfléchir l'énergie produite par le corps vers le corps lui-même de manière à améliorer l'état de santé du corps.
